# NOUVEAU FASCICULE DE BREVET EUROPEEN

(11) **EP 1 674 761 B2**
(45) Date de publication et mention de la décision concernant l'opposition: **11.07.2012**
(45) Mention de la délivrance du brevet: 14.05.2008
(21) Numéro de dépôt: 05292646.6
(22) Date de dépôt: 13.12.2005
(51) Int. Cl.: F16H 1/28, F16H 57/08

(54) **Boîte de transmission à train d'engrenage planétaire**
Planetenrad Getriebeaufbau
Transmission assembly with planetary gear

(30) Priorité: 23.12.2004 FR 0413821
(43) Date de publication de la demande: 28.06.2006
(73) Titulaire: REDEX, 45210 Ferrieres (FR)
(72) Inventeur: Casanova, Pierre, 45200 Montargis (FR); Pichon, Nicolas, 89330 Saint Martin D'Ordon (FR); Grandjean, Bruno, 77300 Fontainebleau (FR)
(74) Mandataire: Robert, Jean-Pierre

(56) Documents cités:
- EP-A- 0 296 376
- EP-B1- 0 824 640
- DE-A1- 2 649 949
- DE-A1- 2 913 039
- DE-A1- 10 123 548
- DE-A1- 10 125 148
- DE-A1- 19 512 980
- US-A- 2 956 451

## Description

La présente invention concerne une boîte de transmission à engrenages planétaire.

### ARRIERE PLAN DE L'INVENTION

Le domaine des boîtes de transmission est bien connu notamment en ce qui concerne les machines tournantes et les machines outils.

Les boîtes les plus compactes sont généralement réalisées à partir d'engrenages planétaires à un ou deux étages selon le rapport de transmission que l'on souhaite obtenir (à puissance transmise égale ou comparable), chaque étage ou chaque train comprenant un pignon solaire sur lequel engrènent des pignons satellites portés par un porte satellites, lesquels pignons satellites engrènent également avec une couronne dentée intérieurement. Le pignon solaire, la couronne dentée et le porte satellites constituent des éléments de la boîte de transmission qui peuvent être reliés à l'extérieur c'est-à-dire à la ligne de transmission, les engrenages divisant ainsi cette ligne en une partie amont généralement issue d'un moteur et en une partie aval qui comprend un organe récepteur de la transmission c'est-à-dire animé d'une vitesse de rotation appliquée avec un couple donné, cet organe étant généralement un élément de machine tournante (outil d'usinage, rouleau de laminoir, vis de presse...).

La boîte comporte également une enveloppe extérieure qui renferme les engrenages et qui elle aussi coopère avec les supports, enveloppes et carters des parties amont et aval de la ligne de transmission. Enfin, le ou l'un des porte-satellites est monté en rotation dans l'enveloppe extérieure au moyen de paliers à roulements, demandant la mise en oeuvre d'un moyen de serrage ou d'assemblage des paliers pour réaliser un calage axial de l'assemblage, le plus souvent sous une contrainte.

Ces moyens d'assemblage forment des organes qui viennent s'ajouter aux pièces strictement fonctionnelles de la boîte de transmission, ce qui est un facteur de renchérissement du prix de revient. Par ailleurs une telle structure requiert un assemblage initial et une surveillance de sa tenue au cours de l'utilisation de la boîte, il s'agit là encore d'un inconvénient auquel il faut remédier.

En outre, le constructeur de boîtes de transmission doit pouvoir satisfaire la demande de différents constructeurs de machines tournantes qui réalisent les lignes de transmission à partir de composants de plusieurs fournisseurs ou de composants qu'ils réalisent eux-mêmes au gré de la machine et de sa géométrie. Il faut donc réaliser des boîtes de transmission quasiment sur mesure, ce qui n'est pas très compatible avec une recherche de rationalisation de la fabrication en vue d'une diminution du coût. Le document WO 2004/005763 A divulgue les caractéristiques du préambule de la revendication 1.

### OBJET DE L'INVENTION

La présente invention propose une solution constructive dans le sens d'une rationalisation des boîtes de transmission, en séparant la fonction transmission avec son rapport de transmission et la fonction centrage et fixation de la boîte pour son intégration dans une ligne de transmission qui doit satisfaire aux contraintes géométriques de cette ligne qui s'imposent à la boîte indépendamment du rapport qu'elle opère. En outre, par son architecture, la boîte selon la présente invention est réalisée avec un nombre réduit d'éléments et, dans le cas d'une gamme, permet le remploi des pièces d'une taille de boîte pour une autre taille, à rapport de transmission égal, les stocks à tenir étant d'autant diminués.

### BREVE DESCRIPTION DE L'INVENTION

A cet effet l'invention a donc pour premier objet une boîte de transmission à train d'engrenages planétaire comportant :
- une enveloppe extérieure équipée d'une couronne dentée intérieurement,
- au moins un porte-satellites de sortie avec des pignons satellites engrenant avec ladite couronne et avec un pignon central,
- un pignon d'entrée et un palier d'entrée ménagé dans l'enveloppe,
- un palier de sortie de boîte ménagé dans l' enveloppe avec des roulements,
dans laquelle boîte de transmission un organe de sortie est attelé en rotation au porte-satellites de sortie qui forme avec ce porte-satellites des moyens de précharge des roulements du palier de sortie, conformément à la revendication 1.

L'organe de sortie est ainsi adapté à correspondre avec la partie aval de la ligne de transmission et peut affecter, pour son accouplement à cette dernière, toute forme appropriée alors qu'il reste dans une configuration standardisée pour ce qui est de sa partie coopérant et avec le porte-satellites et avec le palier de sortie.

L'enveloppe comporte un élément d'enveloppe distinct de la couronne et cet élément d'enveloppe porte les roulements du palier de sortie de boîte.

Ainsi, pour un rapport de transmission donné et pour une puissance à transmettre donnée, la structure de la boîte, en ce qui concerne les engrenages, peut être standardisée quelle que soit la ligne dans laquelle la boîte est placée. Les moyens qui permettent l'ajustement de sa longueur axiale et qui s'adaptent au tronçon de la ligne de transmission en amont et en aval de la boîte peuvent alors être réalisés "sur mesure" pour être adaptés à la ligne et forment une interface personnalisée d'adaptation de la boîte aux besoins de l'application.

L'élément d'enveloppe, les roulements du palier de sortie et l'organe de sortie constituent un sous-ensemble prémonté de la boîte dont la dimension axiale utile à l'établissement de la précharge des roulements est ajustée par une cale annulaire d'épaisseur appropriée à chaque sous-ensemble et située sur sa face radiale tournée vers le porte-satellites de sortie. Cette caractéristique participe d'une rationalisation de la fabrication. En effet, les variations dimensionnelles les plus importantes sont celles qui affectent la longueur axiale des roulements logés dans l'élément d'enveloppe, surtout si ces roulements sont à rouleaux coniques. La cale annulaire permet de corriger ces variations et de présenter au montage final un sous-ensemble adapté au porte satellite de sortie qui lui est de fabrication totalement maîtrisée.

Le second objet de l'invention réside dans une gamme de boîtes de transmission à deux étages, possédant au moins trois tailles pour un même rapport de transmission, telle que, pour les boîtes de taille supérieure à la plus petite, au moins le pignon central, les pignons satellites, leur axe et la couronne du train d'entrée sont identiques à ceux du train de sortie d'une taille inférieure.

D'autres caractéristiques et avantages de l'invention ressortiront de la description donnée ci-après de deux exemples de réalisation non limitatifs.

### BREVE DESCRIPTION DES DESSINS

Il sera fait référence aux dessins annexés parmi lesquels :
- la figure 1 est une vue en coupe axiale d'une boîte de transmission conformément à l'invention avec un seul étage de réduction,
- la figure 2 est une vue en coupe axiale d'une boîte de transmission conforme à l'invention avec deux étages de réduction,
- la figure 3 est une vue partielle en coupe d'une variante de réalisation de l'invention en remplacement de la cale annulaire évoquée ci-dessus.

### DESCRIPTION DETAILLEE DE L'INVENTION

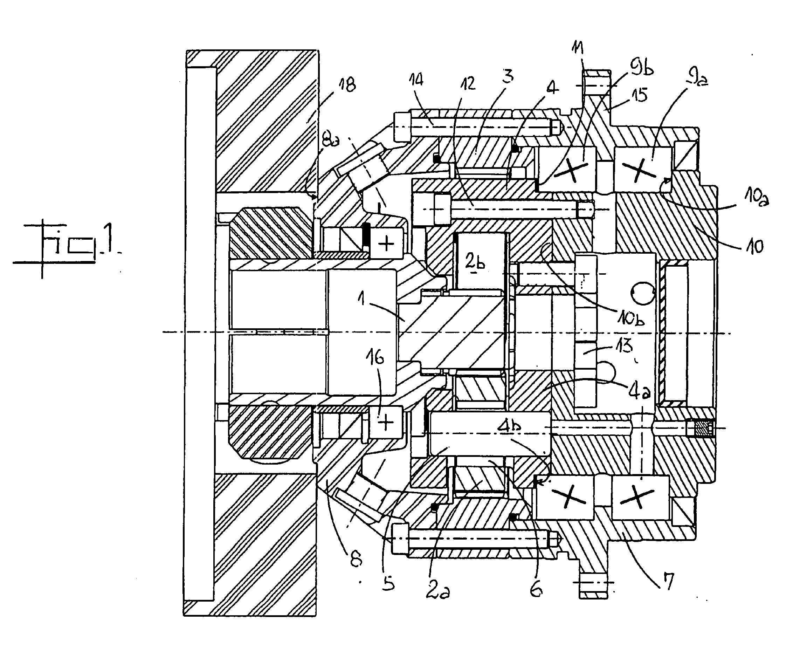

La boîte de transmission représentée à la figure 1 est une boîte de transmission à un étage ou train planétaire. Elle comprend un pignon solaire 1, des pignons satellites 2a, 2b, et une couronne extérieure 3 dentée intérieurement, de sorte que les pignons satellites 2a, 2b engrènent à la fois avec le pignon solaire 1 et avec la couronne extérieure 3. Les pignons satellites 2a, 2b (en réalité il existe trois pignons satellites entre le pignon solaire et la couronne) sont portés par un porte satellites 4 au moyen de tourillons 5 et de paliers à aiguilles 6.

La boîte de transmission comporte une enveloppe extérieure qui comprend la couronne extérieure 3, un premier élément d'enveloppe 7 et un second élément d'enveloppe 8.

Le premier élément d'enveloppe 7 est en forme de manchon tubulaire qui forme la bague extérieure d'un roulement à rouleaux coniques 9a, 9b qui forme le palier de sortie de la boîte de transmission. Ce palier soutient un organe de sortie 10 de la boîte qui forme le moyen d'accouplement du porte-satellites 4 à la partie aval de la ligne de transmission non représentée. Cet organe comporte un épaulement 10a qui constitue un moyen d'appui axial de la bague intérieure du roulement 9a.

La face 10b de l'organe 10 par laquelle il est attelé au porte-satellites 4 est en retrait à l'intérieur de la bague intérieure du roulement 9b de sorte qu'un nez 4a du porte-satellites 4 peut pénétrer dans cette bague. Ce nez 4a définit avec le corps du porte-satellites 4 un épaulement radial 4b.

La bague intérieure du roulement 9b porte une cale annulaire 11 qui est rapportée (par exemple par collage ou par attraction magnétique ou tout autre moyen) sur l'extrémité axiale de cette bague opposée à la bague intérieure de l'autre roulement 9a. Cette cale a pour but d'ajuster la dimension axiale du palier mesurée à partir de l'épaulement 10a d'une part pour corriger les écarts de dimension constatés au niveau des roulements, d'un montage à l'autre (plusieurs dixièmes de millimètres) et d'autre part de fixer la précharge du palier lorsqu'on procède à l'assemblage du porte-satellites 4 avec l'organe de sortie 10 au moyen des vis 12 et des vis 13 qui servent à transmettre le couple entre les deux pièces. L'élément de manchon 7 est quant à lui fixé à la couronne 3 par des vis 14 et possède dans le cas présent une bride 15 pour sa fixation sur une structure fixe de la ligne de transmission.

Le second élément 8 d'enveloppe extérieure est en forme d'un second manchon tubulaire conique fixé à la couronne 3 par plusieurs vis (ici les vis 14), ce manchon constituant la paroi extérieure pour un palier à roulement 16 destiné à centrer une pièce d'accouplement 17 servant à relier en rotation le pignon solaire 1 à un arbre non représenté. Cette pièce d'accouplement est représentée ici comme cela est usuel dans le domaine, par un manchon de pincement de l'arbre destiné à être connecté au pignon solaire 1, lequel possède des cannelures la coopérant avec des cannelures correspondantes de la pièce 17.

Une boîte de transmission à train d'engrenages planétaire possède trois éléments de liaison avec l'environnement extérieur : le pignon solaire, le porte satellites et la couronne. En animant deux de ces trois éléments d'une vitesse de rotation propre, le troisième a une vitesse de rotation déterminée par le rapport de transmission interne à la boîte et par les deux vitesses de rotation imprimées à la boîte. Généralement, la vitesse de la couronne est égale à zéro tandis qu'on applique une vitesse soit au pignon solaire soit au porte satellites et on recueille une autre vitesse soit au porte satellites soit au pignon solaire.

On comprend du mode de réalisation représenté à la figure 1, que le manchon 8 comporte tous les moyens d'interfaçage de la boîte de transmission avec par exemple l'amont de la ligne de transmission. C'est ainsi que la pièce 17 est adaptée au diamètre de l'arbre qu'elle doit recevoir et accoupler au pignon solaire tandis que la face frontale de ce manchon 8 possède un épaulement 8a dont les dimensions sont réalisées pour obtenir une correspondance avec toute bride de fixation telle que 18 pouvant exister dans la ligne de transmission en amont de la boîte.

De la même manière le manchon tubulaire 7 possède, dans le cas de la figure, la bride 15 pour son immobilisation et donc l'immobilisation de la couronne 3 par rapport à des pièces de support de la ligne de transmission. Ce manchon 7 peut en tout état de cause posséder à l'extérieur d'autres moyens pour sa coopération avec la ligne de transmission qui doit l'intégrer. On peut par exemple sans sortir du cadre de l'invention imaginer que ce manchon 7 soit pourvu aux lieu et place de la bride 15, d'une poulie ou d'une couronne dentée extérieure susceptible d'engrener avec un pignon de régulation ou d'asservissement du rapport de transmission de la boîte à une consigne extérieure.

On comprend de ce qui précède que le montage de la boîte selon la figure 1 est très simplement réalisé. A partir du sous-ensemble 7, 9a, 9b, 10 et 11 prémonté, on met en place les pignons satellites 2a, 2b et leurs axes 5 dans le porte-satellites 4, qui est vissé sur le manchon 10 par les vis 12 et 13, assurant ainsi la précharge (ou précontrainte axiale) des roulements 9a, 9b telle qu'elle a été fixée par la cale 11. On loge ensuite les satellites dans la couronne 3, on y accole le manchon 8 avec son palier et le pignon 1 inséré au centre des satellites 2a, 2b et on maintient le tout assemblé axialement par les vis 14.

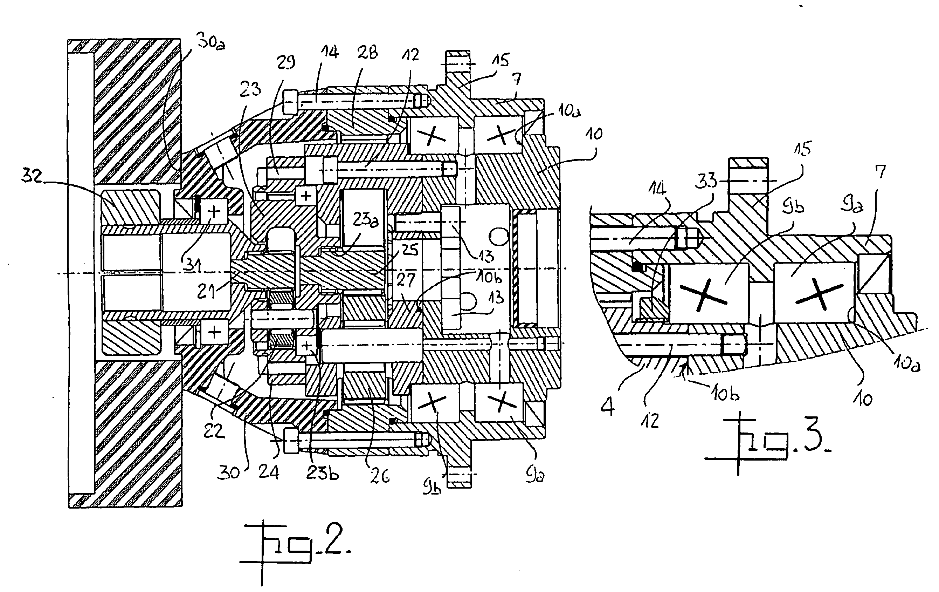

La figure 2 représente une boîte de transmission conforme à l'invention à deux étages. L'un des étages comporte un pignon solaire 21 avec lequel engrènent des pignons satellites 22 qui sont portés par un porte-satellites 23, les pignons 22 engrenant également avec une couronne extérieure 24.

Le porte-satellites 23 est accouplé en rotation par des cannelures 23a à un deuxième pignon solaire 25 qui engrène avec des pignons satellites tels que 26 portés par un porte satellites 27, les pignons 26 engrenant également avec une couronne dentée 28. Le porte-satellites 27 est également solidaire en rotation de la couronne 24 de l'autre étage de transmission. Des vis 29 assurent cette liaison entre couronne 24 et le porte satellites 27. Un palier à roulement 23b est prévu entre l'ensemble porte-satellites 27, couronne 24 et le porte satellites 23.

Comme dans la figure précédente, on retrouve le premier élément d'enveloppe 7 avec ses roulements 9a, 9b, la cale 11, l'organe 10... déjà décrits avec les mêmes références reliés pour l'élément 7 par les vis 14 à la couronne 28 pour l'organe 10 au porte satellites 27 par les vis 12 et 13.

Le second élément d'enveloppe est ici noté 30, plus long axialement que l'élément 8, et comprend comme précédemment un palier 31 de soutien pour une pièce 32 d'accouplement du pignon solaire 21 à un arbre par exemple d'entrée appartenant à la ligne de transmission, ce manchon 30 présentant également un épaulement 30a pour son adaptation à une bride de fixation formant un élément de la partie amont de la ligne de transmission. Le manchon 30 est fixé à la couronne 28 par les vis 14.

Cette architecture de boîte de transmission à deux étages permet de construire une gamme de boîtes pour un rapport de transmission donné comportant au moins trois tailles, chacune des tailles étant adaptée à une puissance maximale à transmettre, dans laquelle gamme le train planétaire d'entrée, c'est-à-dire le premier étage, correspond au train planétaire de sortie de la boîte d'une taille précédente, à l'exception de la première taille, c'est-à-dire la plus petite, qui ne possède pas de taille inférieure.

En d'autres termes, si l'on considère que la boîte représentée à la figure 2 correspond à une boîte de la troisième taille d'une gamme d'un rapport donné, les satellites 22, les axes 26, le pignon 21, correspondent respectivement aux satellites 2a, 2b, aux axes et au pignon 25 c'est-à-dire aux engrenages formant le train planétaire de sortie de la boîte d'une taille inférieure de la gamme. La couronne 24 est en réalité la couronne 28 de cette boîte inférieure, axialement retournée.

La possibilité de réaliser de telles combinaisons constitue un gain important au plan de la fabrication de ces boîtes de transmission. En outre, en ayant permis de diminuer le nombre de pièces à tenir en stock, elle permet de répondre plus rapidement à la demande du marché et à moindre coût puisque pour une quantité donnée de boîtes de transmission, les pièces identiques sont fabriquées en plus grande série. Enfin, le sous-ensemble formé par les pièces 7, 9a, 9b, 10 et 11 est prémonté et testé en amont de tout montage final réalisé en réponse à une commande déterminée, permettant ainsi de réduire considérablement les délais de réalisation des boîtes et donc les délais de satisfaction d'une commande.

Dans une variante de réalisation de l'invention représentée à la figure 3, l'anneau de calage 11 peut être remplacé par un écrou 33 qui est vissé sur le porte-satellites de sortie 4. On réalise l'assemblage du porte-satellites 4 et de l'organe 10 par les vis 12 et 13 puis on règle la précharge ou contrainte axiale du palier à roulements 9a, 9b par manoeuvre contrôlée de l'écrou 33.

## Revendications

1. Boîte de transmission à train d'engrenage planétaire comportant .
- une enveloppe extérieure équipée d'une couronne (3 ; 28) dentée intérieurement,
- au moins un porte-satellites (4 ; 27) de sortie avec des pignons satellites (2a, 2b ; 26) engrenant avec ladite couronne (3 ; 28) et avec un pignon central (1, 25),
- un pignon d'entrée (1 ; 21) et un palier d'entrée (16) ménagé dans l'enveloppe,
- un palier de sortie de boîte ménagé dans l'enveloppe avec des roulements (9a, 9b),
la boîte de transmission comportant un organe de sortie (10) assemblé au porte-satellites (4 ; 27) qui forme avec ce porte-satellites un moyen de précharge des roulements (9a, 9b) du palier de sortie, **caractérisée en ce que** l'enveloppe comporte un élément d'enveloppe (7) distinct de la couronne (3, 28), cet élément d'enveloppe portant les roulements (9a, 9b) du palier de sortie de boîte, et **en ce que** l'élément d'enveloppe (7), les roulements (9a, 9b) du palier de sortie et l'organe de sortie (10) constituent un sous-ensemble pré-monté de la boîte dont la dimension axiale utile à l'établissement de la précharge des roulements (9a, 9b) est ajustée soit par une cale annulaire (11) d'épaisseur appropriée à chaque sous-ensemble et située du côté de sa liaison au porte-satellites (4 ; 27) de sortie, soit par un écrou (33) de précharge des roulements du palier de sortie porté par le porte-satellites.

2. Boîte de transmission selon l'une des revendications précédentes, **caractérisée en ce que** le palier (16, 31) d'entrée est porté par un second élément d'enveloppe (8 ; 30) assemblé à la couronne dentée (3; 28) à l'opposé du premier élément d'enveloppe (7).

3. Boîte de transmission à train planétaire à un étage selon l'une des revendications précédentes, **caractérisée en ce que** le pignon central (1) et le pignon d'entrée sont un seul et même pignon.

4. Boîte de transmission à train planétaire à deux étages selon l'une des revendications 1 à 2, **caractérisée en ce que** le pignon central (25) est calé en rotation sur le porte-satellites (23) d'un train planétaire d'entrée possédant une couronne (24) fixée en rotation sur le porte-satellites (27) de sortie et dont le pignon solaire (21) est le pignon d'entrée.

5. Gamme de boîtes de transmission selon la revendication 4, possédant au moins trois tailles pour un même rapport de transmission, **caractérisée en ce que**, pour les boîtes de taille supérieure à la plus petite, au moins le pignon central (21), les pignons satellites (22), leur axe et la couronne (24) du train d'entrée sont identiques à ceux du train de sortie d'une taille inférieure.

## Claims

1. A planetary gear train transmission comprising:
• an outer case fitted with a ring gear (3; 28) having internal teeth;
• at least one outlet planet carrier (4; 27)having planet gears (2a, 2b ; 26) meshing with said ring gear (3 ; 28), and with a central, sun gear (1, 25);
• an inlet gear (1; 21) and an inlet bearing (16) provided in the case; and
• an outlet bearing of the transmission provided in the case;
the transmission having an outlet member (10) coupled to rotate with the outlet planet carrier (4; 27) and co-operating with the planet carrier to form means for preloading the outlet bearing (9a, 9b); **characterized in that** the case includes a case element(7) distinct from the ring gear (3, 28), said case element carrying the outlet bearing (9a, 9b) of the transmission and **in that** the case element (7), the outlet bearing (9a, 9b) and the outlet member (10) constitute a preassembled subassembly of the transmission in which the axial dimension suitable for preloading the bearing (9a, 9b) is adjusted either by an annular spacer (11) of appropriate thickness for each subassembly and situated beside its connection with the outlet planet carrier (4; 27), or by a nut (33) carried by the planet carrier for preloading the outlet bearing.

2. A transmission according to claim 1, **characterized in that** the inlet bearing (16, 31)is carried by a second case element (8; 30) assembled with the ring gear (3; 28) on its side remote from the first case element (7).

3. A one-stage planetary gear train transmission according to any preceding claim, **characterized in that** the central, sun gear (1) and the inlet gear are a single and same gear.

4. A two-stage planetary gear train transmission according to any one of claim 1 to 2, **characterized in that** the central, sun gear (25) is constrained to rotate with the planet carrier (23) of an inlet planetary gear train possessing a ring gear (24) constrained to rotate with the outlet planet carrier (27) associated with a central, sun gear (21) that is the inlet gear.

5. A range of transmissions according to claim 4, possessing at least three sizes for a given gear ratio, the range being **characterized in that** for the transmissions of sizes greater than the smallest size, at least the central, sun gear (21), the planet gears (22), their journals, and the ring gear (24) of the inlet gear train are identical to those of the outlet gear train of a smaller size.

## Patentansprüche

1. Planetenrad-Getriebe, umfassend:
- ein äußeres Gehäuse, das mit einem Innenzahnkranz (3; 28) versehen ist,
- mindestens einen Ausgangs-Planetenradträger (4; 27) mit Planetenrädern (2a, 2b; 26), die mit dem genannten Kranz (3; 28) und mit einem Zentralritzel (1, 25) in Eingriff stehen,
- ein Eingangsritzel (1; 21) und ein Eingangslager (16), das in dem Gehäuse angeordnet ist,
- ein in dem Gehäuse angeordnetes Getriebeausgangslager mit Wälzkörpern (9a, 9b),
das Getriebe ein Ausgangselement (10) umfassend, das an dem Planetenradträger (4; 27) montiert ist und mit diesem Planetenradträger Mittel zum Vorspannen der Wälzkörper (9a, 9b) des Ausgangslagers bildet ;
**dadurch gekennzeichnet, dass** das Gehäuse ein Gehäuseelement (7) umfasst, das von dem Kranz (3, 28) getrennt ist, wobei dieses Gehäuseelement die Wälzkörper (9a, 9b) des Getriebeausgangslagers trägt, und dass das Gehäuseelement (7), die Wälzkörper (9a, 9b) des Ausgangslagers und das Ausgangselement (10) eine vormontierte Untereinheit des Getriebes bilden, deren axiale zum Erzeugen der Vorspannung der Wälzkörper (9a, 9b) nutzbare Abmessung von einer ringförmigen Beilagscheibe (11) mit einer für jede Untereinheit passenden Stärke eingestellt wird, die sich auf der Seite ihrer Verbindung mit den Ausgangs-Planetenradträgern (4; 27) befindet, oder von einer Mutter (33) zum Vorspannen der Wälzkörper des Ausgangslagers umfasst, das bei der Planetenradträger getragen ist.

2. Getriebe nach Anspruch 1, **dadurch gekennzeichnet, dass** das Eingangslager (16, 31) von einem zweiten Gehäuseelement (8; 30) getragen wird, das am Zahnkranz (3; 28) entgegengesetzt zum ersten Gehäuseelement (7) montiert ist.

3. Einstufiges Planetenrad-Getriebe nach einem der vorhergehenden Ansprüche, **dadurch gekennzeichnet, dass** das Zentralritzel (1) und das Eingangsritzel ein und dasselbe Ritzel sind.

4. Zweistufiges Planetenrad-Getriebe nach einem der Ansprüche 1 oder 2, **dadurch gekennzeichnet, dass** das Zentralritzel (25) drehfest auf den Planetenradträger (23) eines Eingangsplanetengetriebes verkeilt ist, das einen Kranz (24) aufweist, der drehfest auf dem Ausgangsplanetenradträger (27) befestigt ist, und dessen Sonnenrad (21) das Eingangsritzel ist.

5. Getriebesatz nach Anspruch 4, der mindestens drei Größen für ein gleiches Übersetzungsverhältnis hat, **dadurch gekennzeichnet, dass** für die Getriebe mit einer Größe, die größer als das kleinste ist, mindestens das Zentralritzel (21), die Planetenräder (22), ihre Achse und der Kranz (24) des Eingangsgetriebes identisch zu denen des Ausgangsgetriebes einer kleineren Größe sind.
